# EUROPÄISCHE PATENTSCHRIFT

(11) **EP 3 477 274 B1**
(45) Veröffentlichungstag und Bekanntmachung des Hinweises auf die Patenterteilung: **03.06.2020**
(21) Anmeldenummer: 18194224.4
(22) Anmeldetag: 13.09.2018
(51) Int. Cl.: G01N 29/46, G01M 3/24, F25B 49/00, G01N 29/036

(54) **LECKAGE-ERKENNUNG**
LEAK DETECTION
DÉTECTION DE FUITE

(30) Priorität: 25.09.2017 DE 102017122126
(43) Veröffentlichungstag der Anmeldung: 01.05.2019
(73) Patentinhaber: Vaillant GmbH, 42859 Remscheid (DE)
(72) Erfinder: Krampe-Zadler, Christof, 44628 Herne (DE); Lingk, Tobias, 42799 Leichlingen (DE); Spahn, Hans-Josef, 40699 Erkrath (DE)
(74) Vertreter: Popp, Carsten

(56) Entgegenhaltungen:
- EP-A2- 0 697 586
- WO-A1-2008/144864
- JP-A- 2005 241 089

## Beschreibung

Die Erfindung betrifft ein Verfahren zur Erkennung von Leckagen in geschlossenen Fluid- Kreisläufen, in denen das Arbeitsfluid ein Zwei-Phasen-Gemisch durchläuft. Aus thermodynamischer Sicht betrifft dies vor allem den Clausius-Rankine-Prozess und seine Varianten Kältemaschinenprozess, Wärmepumpenprozess, Kompressions-Wärmepumpenprozess und Dampfturbinenprozess, wobei diese Aufzählung aber nicht vollständig ist und die Kreisprozesse auch unter den verschiedensten Bezeichnungen bekannt geworden sind.

Die Schwierigkeit besteht darin, das jeweilige Arbeitsfluid sicher im Prozess zu halten und Leckagen möglichst zu verhindern. Die Schwierigkeiten werden im Folgenden anhand des Wärmepumpenprozesses bzw. des analog ausgestalteten Kältemaschinenprozesses näher erläutert, sie gelten aber sinngemäß auch für alle anderen oben genannten Kreisprozesse. In der Vergangenheit wurden als Arbeitsfluide vorwiegend Sicherheitskältemittel verwendet, bei denen auftretende Leckagen und deren Vermeidung sich überwiegend wirtschaftlichen Bedenken entgegenstehend sahen, die Arbeitsfluid waren teuer. Schätzungen zufolge entsprangen bis zu 70 Prozent der Produktion solcher Sicherheitskältemittel dem Nachfüllbedarf undichter Anlagen. Wärmepumpen, Kühlschränke und Klimaanlagen galten zu dieser Zeit bis auf eben diesen Nachfüllbedarf als praktisch wartungsfrei.

Diese Situation hat sich geändert, seitdem die Sicherheitskältemittel als Treibhausgase und als Ozonschicht-schädigend erkannt worden sind. Inzwischen sind alle Sicherheitskältemittel, die fluorierte Kohlenwasserstoffe enthalten, bis auf Ausnahmefälle verboten und durch andere Kältemittel zu ersetzen. Diese Ersatzkältemittel sind teuer, korrosiv, brennbar oder giftig, und sie erfordern oft hohe Arbeitsdrücke. Dadurch sind die Ansprüche an Dichtheit, die an die apparativen Ausrüstungen gestellt werden, erheblich gewachsen. Gleichzeitig sind auch der Bedarf an Kontroll- und Warneinrichtungen sowie der Diagnose- und Dokumentationsbedarf angewachsen. Der Wunsch wartungsfreier und kostengünstiger Systeme ist jedoch geblieben.

Die Gründe für Undichtigkeiten bzw. Leckagen und die damit verbundenen Verluste von Kältemittel sind Vibrationen, Temperatur- und Druckschwankungen, die zu Ausdehnung und Zusammenziehen führen, und Verbindungsstellen verschiedener Bauteile. Leckagen finden sich hauptsächlich an Lötstellen, die meisten Leckagen sind schwach und können auch nur zeitweilig auftreten, was ihre Lokalisation erschwert.

Sowohl für die Suche nach Leckagen, deren Überwachung als auch für deren Verhinderung sind verschiedene Methoden bekannt. Üblich sind nach dem Stand der Technik eine Druckprüfung, bei der das System ohne Kältemittel mit einem Inertgas unter Druck gesetzt wird und verdächtige Teile mit Seifenlösung eingesprüht werden. Leckagen zeigen sich dann durch Schaumbildung. Es ist auch möglich, dem Inertgas oder auch dem späteren Kältefluid fluoreszierende Stoffe beizugeben, Leckagen können dann mit UV-Beleuchtung aufgespürt werden. Wenn die Apparate eingehaust sind oder sich in geschlossenen Räumen befinden, werden Gassensoren eingesetzt, die auch bei kleinsten Konzentrationen anschlagen können. Hierbei kommen Infrarotzellen zum Einsatz. Diese sind allerdings recht teuer und müssen ggf. auch explosionsgeschützt ausgeführt werden.

Je feiner solche Detektoren eingestellt sind, desto häufiger sind Fehlalarme zu beobachten, im Falle von Gassensoren vor allem dann, wenn es sich bei den Kältemitteln um natürliche Stoffe wie Kohlenwasserstoffe, Kohlendioxid oder Ammoniak handelt. Außerdem kann bei Leckagen Strähnenbildung auftreten und es ist nicht sichergestellt, dass die Detektoren so platziert sind, dass sie die Leckagen in allen Fällen erkennen. Sofern die Anlage für eine Leckagesuche geleert und mit Prüfgas gefüllt werden muss, kann es sein, dass sich die Leckage dann nicht mehr zeigt, weil sie nur bei bestimmten Temperaturen, Drücken oder Schwingungen auftritt.

Eine weitere Überwachungsmethode wird von der DE 10 2013 100 410 A1 beschrieben. Hierbei wird eine füllmengensensitive Messgröße über einen vorgegebenen Zeitraum hinweg erfasst und damit eine Ist-Häufigkeitsverteilung der Messwerte erstellt. Diese Ist-Häufigkeit innerhalb des vorgegebenen Zeitraums wird mit einer Referenz-Häufigkeitsverteilung verglichen und der Versatz bestimmt und bewertet. Zeitreihen werden nicht gebildet, sondern ausgeschlossen. Eine solche füllmengensensitive Messgröße kann der Füllstand eines Kältemittelreservoirs, die Austrittstemperatur am Verflüssiger oder die Gasblasen-Frequenz und deren Größenspektrum sein. Kleine Leckagen scheinen mit dieser Methode nur schwer detektierbar zu sein, außerdem zeigt die Methode den Ort der Leckage nicht an.

Die von der US 5,174,125 A beschriebene Überwachungsmethode zeigt einen Verlängerungsarm, der an einer Kältemittelleitung angebracht wird, die dem Entspannungsventil nachgelagert ist. Der Verlängerungsarm verstärkt die Vibrationen des Kältemittels, wenn es weniger wird. An dem Verlängerungsarm ist ein Beschleunigungssensor angebracht, der ein Signal sendet. Auf diese Weise kann im Vorfeld eines deutlichen Kältemittelverlusts eine frühe Warnung ausgegeben werden, um anzuzeigen, dass die Kühlfunktion gefährdet ist. Zur Detektion kleiner Leckagen ist diese Methode jedoch nicht geeignet.

Die von der DE 102 14 519 A1 beschriebenen Überwachungsmethode nutzt die Wärmeabstrahlung auf Seiten des Verflüssigers und den Unterschied zwischen der berechneten Wärmeabstrahlung und der durch einen Temperatursensor gemessenen. Diese Differenz dient als Signal.

Auch konstruktiv sind eine Reihe von Technologien zur Vermeidung von Leckagen bekannt geworden. So beschreibt die EP 2 207 962 B1 einen Kältemittelverdichter, welcher ein hermetisch dichtes Verdichtergehäuse aufweist. Da die durch den Betreib der Kolben-Zylindereinheit und dessen Antriebsmotor entstehenden Vibrationen sämtliche Teile des Kältemittelverdichters belasten und diese Vibrationen auf das Druckrohr erfolgen, werden Mittel vorgeschlagen, um diese schädliche Vibrationen, die die Ursache der meisten Leckagen seien, zu verringern oder wenigstens zu entkoppeln. Es hat sich dabei das technische Vorurteil verfestigt, dass Vibrationen nicht nützlich seien und daher verhindert werden müssten.

Die vorliegende Erfindung hat daher die Aufgabe, auch kleine Leckagen sicher zu erkennen und den Ort der Leckage einzugrenzen. Im Falle kritischer Leckagen soll das Verfahren die Anlage in einen sicheren Zustand versetzen und einen Alarm ausgeben können. Auch andere Gerätefehler soll das Verfahren erkennen können.

Bekannt geworden sind auch die JP 2005 241 089 A, die WO 2008/144864 A1 und die EP 697 586 A2. Die JP 2005 241 089 A beschreibt eine Gefrieranlage mit einen Kühlkreis, bei dem Zustandsgrößen um einen Kompressor ermittelt werden, darunter Schalldruck, Vibrationen und Strombedarf. Aus abnormalen Verhalten wird mittels statistischer Analysen, vor allem durch Bestimmung des Mahalanobis-Abstands, auf eine Leckage geschlossen. Die WO 2008/144864 A1 beschreibt ein Diagnosesystem in Gefrieranlagen, bei dem mittels mechanischer Wellen, die in zwei Kategorien eingeteilt werden, auf Fehlfunktionen geschlossen wird. Bei den beiden Kategorien wird unterschieden zwischen Schwingungen, die vom System generiert werden, wie etwa durch den Verdichter, und solchen, die nicht vom System generiert werden. Die EP 697 586 A2 beschreibt allgemein ein Leckageerkennungssystem, welches vorwiegend für nukleare Energieerzeugungsanlagen geeignet ist, in dem das Schwingungsverhalten erfasst und analysiert wird. Zur Erkennung von abnormalem Verhalten kommen ein neuronales Netzwerk und Fuzzy Logic zum Einsatz.

Die Erfindung löst diese Aufgabe zur Erkennung von Verlusten von Arbeitsfluid in einem geschlossenen thermodynamischen Kreisprozess, in dem ein Zweiphasenzustand vorliegt, indem
- Schwingungen mittels einer Vielzahl von Beschleunigungssensoren, die die Schwingungen wenigstens einer Komponente des Systems, in denen das Arbeitsfluid zweiphasig vorliegt, in wenigstens zwei Raumrichtungen gemessen werden,
- diese gemessenen Daten aufgezeichnet werden,
- daraus Zeitreihen gebildet werden,
- diese Zeitreihen in den Frequenzraum transformiert werden, wobei Frequenzspektren erzeugt werden,
- die Frequenzspektren nach der Zeit gelistet und bei verschiedenen Betriebszuständen aufgezeichnet werden,
- die Frequenzspektren nach unterschiedlichen Betriebszeiten miteinander korreliert werden,
- Abweichungen der Frequenzspektren bei gleichen Betriebszuständen detektiert werden,
- und bei einer Verschiebung der Frequenzspektren ein Warnsignal ausgegeben wird, und
- Beschleunigungssensoren die vom System angeregten Schwingungen erfassen und mindestens ein Schwingungsgeber diese vom System angeregten Schwingungen durch gegenphasige Schwingungen dämpft.

Die üblichen thermodynamischen Kreisprozesse, in denen Zweiphasensystem auftreten, benötigen einen Verdichtungsschritt, der in praktischen Anwendungen von einem Verdichter realisiert wird. Dieser Verdichter, der gelegentlich auch als Kompressor bezeichnet wird, ist in den meisten Fällen auch die Hauptquelle für Schall und Vibrationen. Diese sind zu messen. Die Schwingungsmuster von gasdurchströmten Apparaten und Rohren unterscheiden sich deutlich von denen, in denen eine Flüssigkeit fließt. Dies gilt vor allem in Zweiphasengebieten. Im Falle von Fluidverlusten, die auf Leckagen schließen lassen, fließt insgesamt weniger Flüssigkeit durch die Apparate und Rohre und auch die Gesamtmasse des Systems verringert sich, dies zeigt sich auch im Schwingungsmuster.

Daher werden diese Schwingungsmuster über Beschleunigungssensoren erfasst, in elektrische Signale umgewandelt, als Daten erfasst, aufgezeichnet und in eine automatisch auswertbare Form gebracht. Die automatische Auswertung erfolgt durch einen Mustervergleich, für den verschiedene Verfahren zur Verfügung stehen. In allen Fällen werden zunächst Zeitreihen gebildet, aus denen Frequenzspektren erzeugt werden. Dies kann entweder so geschehen, dass man die erhaltenen zeitlichen Amplitudenverläufe über den Frequenzen und der Zeit aufträgt und so einen Kurvenverlauf erhält, den man periodenweise durch Übereinanderlegen vergleichen kann. Ebenso ist es möglich, eine Fast-Fourier-Zerlegung durchzuführen und die jeweils erhaltenen Zahlenwerte zu vergleichen. Hierbei können auch die Eigenfreqenzen des Systems ermittelt werden.

Dieser Vorgang muss für jeden Betriebszustand durchgeführt werden, damit man die Soll-Zustände kennt. Mit diesen Soll-Zuständen werden die jeweiligen Messkurven verglichen. Falls das Muster beim Korrelieren ergibt, dass sich die Frequenzen nach oben verschieben, ist von einem Arbeitsmittel-Verlust auszugehen, woraus auf eine Leckage geschlossen wird.

Die Verschiebung der Frequenzspektren kann nach oben oder nach unten erfolgen. Dabei ist es auch möglich, dass ein Teil der Frequenzspektren sich nach oben verschiebt und ein anderer Teil nach unten. In Ausgestaltungen der Erfindungen ist daher vorgesehen, dass bei einer signifikanten Verschiebung der Frequenzspektren nach oben ein Leckage-Warnsignal ausgegeben wird und bei einer signifikanten Verschiebung der Frequenzspektren nach unten ein Geräte-Warnsignal ausgegeben wird. Mit einem Geräte-Warnsignal ist hierbei etwa ein vermuteter Lagerschaden oder ein vermutetes Lösen einer Verbindung gemeint, in beiden Fällen kann dies parallel zu einem Leckageverlust oder einer drohenden Leckage führen.

Es ist auch vorgesehen, dass Schwingungsgeber das System mit Schwingungsbändern über einen großen Frequenzbereich erregen. Wie in der EP 2 207 962 B1 beschrieben, regt der üblicherweise installierte Verdichter über sein Druckrohr die Installationen an. Es kann jedoch einerseits gewünscht sein, dass diese Verdichterschwingungen nicht auf nachfolgende Wärmetauscher übertragen werden, was im Fall einer Wärmepumpe einer Übertragung auf den angeschlossenen Heizkreislauf bedeuten würde, andererseits sind sehr feine Verschiebungen des Frequenzspektrums nur schlecht detektierbar und man würde das Risiko von Fehlalarmen eingehen, wenn jede sehr kleine Änderung sofort zu einem Alarm führen würde.

Anstatt also die Fremderregung durch den Verdichter sowie die Oberschwingungen zur Analyse zu nutzen, kann man vorsehen, dass Beschleunigungssensoren die vom System angeregten Schwingungen erfassen und mindestens ein Schwingungsgeber diese vom System angeregten Schwingungen durch gegenphasige Schwingungen dämpft. Dies hat einerseits den Vorteil, dass auch die Schallübertragung an angeschlossene Wärmetauscher geringer ausfällt, andererseits kann derselbe Schwingungsgeber ein Schwingungssignal über einen großen Frequenzbereich abgeben, etwa ein Ansteigen eines Tons von sehr tiefen Frequenzen, beispielsweise 25 Hz, bis hin zu hohen 4 kHz, innerhalb eines Zeitraums von beispielsweise einer Sekunde, und anschließend in der Nähe der erkannten Eigenschwingungen herum ähnliche Analysen in Hochauflösung durchzuführen. Selbstverständlich kann dies an mehreren Stellen durchgeführt werden, in Sonderfällen können auch höhere Frequenzen bis zum Ultraschall eingesetzt werden.

In einer weiteren Ausgestaltung des Verfahrens ist daher vorgesehen, dass jeder der Beschleunigungssensoren die Beschleunigungen in drei Raumachsen misst, wobei diese vorzugsweise senkrecht aufeinander stehen.

Weitere Ausgestaltungen befassen sich mit der Gewinnung von Referenzwerten, mit denen die Korrelation der ermittelten Frequenzspektren und Eigenfrequenzen erfolgt. Hierbei wird vorgesehen, dass zur Gewinnung von Eigenfrequenzverschiebungswerten aufgrund von Fluidverlusten das Befüllen der Vorrichtung mit Arbeitsfluid in Stufen erfolgt, wobei nach jedem Befüllschritt mindestens ein Betriebslauf unter Ermittlung der jeweiligen Eigenfrequenzen für den jeweiligen Teilbefüllungszustand ermittelt wird, und die gemessenen Frequenzspektren mit diesen Messwerten für Teilbefüllung korreliert werden.

Alternativ wird vorgesehen, dass zur Gewinnung von Eigenfrequenzverschiebungskurven aufgrund von Fluidverlusten das Befüllen der Vorrichtung mit Arbeitsfluid kontinuierlich erfolgt, wobei nach Erreichen einer Mindestfüllmenge die Anlage eingeschaltet wird und die jeweiligen Eigenfrequenzen während des weiteren Befüllvorgangs in Abhängigkeit der Füllmenge ermittelt werden, und die gemessenen Frequenzspektren mit diesen Messwerten für Teilbefüllung korreliert werden. Beide Alternativen können auch kombiniert werden, wobei die Pausen zwischen Befüllungsstufen dafür genutzt werden, dass Aktuatoren Schwingungen über einen großen Frequenzbereich erzeugen.

Die Aufgabe der Erfindung wird auch gelöst durch eine Vorrichtung zum Erkennen einer Leckage in einer Anlage, in der ein Fluid in einem Zweiphasenzustand vorliegt, wobei die Vorrichtung
- einen geschlossenen Kreislauf aufweist, in dem dieses Fluid zirkuliert,
- mindestens einen Verdichter und mindestens eine Entspannungsvorrichtung aufweist,
- mindestens eine Kreislaufpumpe aufweist,
- mindestens zwei Wärmetauscher aufweist, von denen der eine Wärme in das Fluid einführt und der andere Wärme aus dem Fluid entnimmt, wobei
- in mindestens einem Teil der Vorrichtung, in dem im bestimmungsgemäßen Betrieb ein Zweiphasensystem des Fluids vorliegt, eine Vielzahl von Beschleunigungssensoren angebracht ist,
- wobei diese Beschleunigungssensoren Schwingungen in mindestens zwei Raumachsen aufnehmen können,
- die Beschleunigungssensoren mit einer Rechenvorrichtung zur Speicherung und Auswertung verbunden sind, die daraus Zeitreihendaten bildet und diese Zeitreihen in den Frequenzraum transformiert,
- die gewonnenen Frequenzspektren in einer spektrographischen Darstellung nach der Zeit listet und bei verschiedenen Betriebszuständen aufgezeichnet,
- diese Frequenzspektren nach unterschiedlichen Betriebszeiten miteinander korreliert,
- und bei einer Verschiebung der Frequenzspektren ein Warnsignal ausgibt, und
- mindestens ein Schwingungsgeber angebracht ist, der das System mit Schwingungsbändern über einen großen Frequenzbereich erregen kann und eine gegenphasige Schwingung zu den fremderregten Schwingungen erzeugt.

In Ausgestaltungen der Vorrichtung ist vorgesehen, dass sie bei einer Verschiebung der Frequenzspektren nach oben ein Leckage-Warnsignal ausgibt und bei einer Verschiebung der Frequenzspektren nach unten ein Geräte-Warnsignal ausgibt.

In einer Ausgestaltung der Vorrichtung ist vorgesehen, dass mindestens ein Schwingungsgeber in einem Teil der Vorrichtung, in der im bestimmungsgemäßen Betrieb ein Zweiphasensystem des Fluids vorliegt, angebracht ist, der das System mit Schwingungsbändern über einen großen Frequenzbereich erregen kann.

Die Erfindung wird nun anhand der Figuren detailliert erläutert, wobei als Beispiel eine Wärmepumpe gewählt ist. Hierbei zeigen:
Fig. 1: ein Übersichtsbild einer Wärmepumpenanlage mit Beschleunigungssensoren und Schwingungsgeber,
Fig. 2a: einen gemessenen zeitlichen Signalverlauf für eine bestimmte Frequenz,
Fig. 2b: ein Frequenzspektrum bei einer Kältemittelmasse 1,
Fig. 2c: ein Frequenzspektrum bei einer Kältemittelmasse 2 nach einem Kältemittelverlust,
Fig. 3: ein Flussdiagramm zur Leckageerkennung.

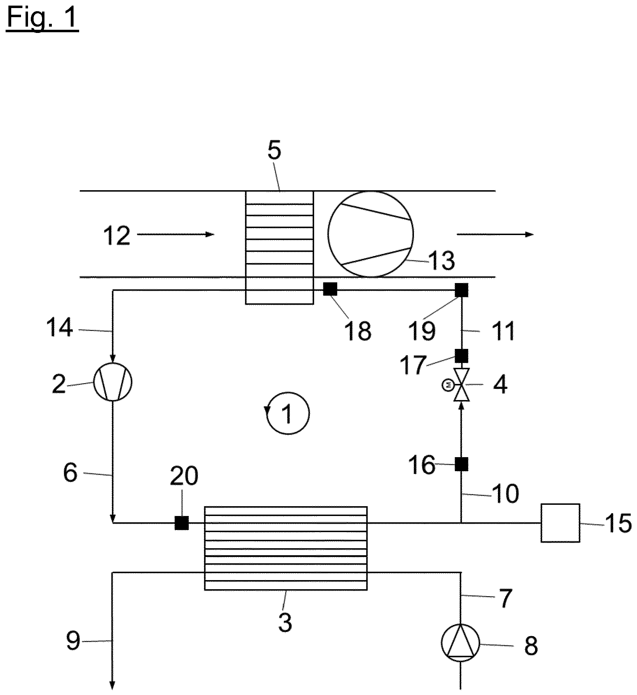

Fig. 1 zeigt ein einfaches Luft/Wasser-Wärmepumpensystem, welches in diesem Beispiel einen Kühlkreislauf 1 mit einem Kältekompressor 2, einem Kondensor 3, einem Entspannungs-Regelventil 4 und einem Verdampfer 5 umfasst. Hierbei strömt verdichtetes Kältemittel 6 zum Kondensor 3, wo es seine Wärme an den Wärmeträgerstrom 7 abgibt, der von der Umwälzpumpe 8 als Wärmestrom 9 zum Verbraucher gefördert wird. Das hierdurch abgekühlte und kondensierte Kältemittel 10 gelangt zum Entspannungs-Regelventil 4, wobei es sich weiter abkühlt und als Kältestrom 11 in den Verdampfer 5 geleitet wird. Dort nimmt es Wärme der Umgebungsluft 12, die vom Lüfter 13 durch den Verdampfer 5 gesogen wird, auf. Das erwärmte Kältemittel 14 wird wieder von Kältekompressor 2 verdichtet, womit der Kältekreislauf 1 geschlossen ist.

Das Zweiphasengebiet umfasst dabei den Kondensor 3, das kondensierte Kältemittel 10, das Entspannungs-Regelventil 4 und den Verdampfer 5. Hinter dem Kondensor 3 ist ein Sammelbehälter 15 angeordnet. In diesem Leitungsstrang werden die Beschleunigungssensoren 16, 17 und 18 angeordnet, die jeweils Beschleunigungen in 3 Raumachsen aufnehmen. Mit dem Aktuator 19 als Schwingungsgeber können dem System Schwingungen aufgegeben werden. Damit ist es möglich, beispielsweise innerhalb eines kurzen Zeitintervalls dem System ein Frequenzband von 0 bis 4000 Hertz aufzuprägen und die Schwingungscharakteristik in Abhängigkeit des Füllungsgrades zu bestimmen. Dies kann während des anfänglichen Befüllungsvorgangs mehrfach durchgeführt werden, auch während die Anlage im Testbetrieb bereits läuft, um jedem Befüllungszustand ein entsprechendes Schwingungsmuster zuordnen zu können, welches im späteren Betrieb der Korrelation dient.

Der Aktuator 20 dient der Schwingungskompensation des Kältekompressors 2 und ist zweckmäßigerweise direkt vor dem Kondensor 3 angeordnet, damit der Kondensor 3 die Schwingungen des Kältekompressors nicht an den Heizkreislauf weitergeben kann. Auf diese Weise wird eine deutliche Geräuschminderung erreicht. Gleichzeitig kann dieser Aktuator 20 genauso wie der Aktuator 19 definierte Schwingungen zu Prüfzwecken in das System einleiten.

Als Beschleunigungssensoren 16, 17 und 18 dienen dabei handelsübliche Sensoren, wie man sie auch in Smartphones findet. Diese sind wesentlich preisgünstiger, als die bislang verwendeten Gassensoren, und sie erzeugen außerdem einen ständigen Datenfluss, aus dem man leicht und schnell erkennt, ob bzw. dass die Sensoren weiterhin ordnungsgemäß funktionieren. Sie müssen daher weder regelmäßig getestet noch gewartet werden, sondern man kann sich auf Situationen beschränken, in denen die Daten auf einen irregulären Betrieb hindeuten.

Die Schwingungsanregung erfolgt im regulären Betrieb vorwiegend durch den Kältekompressor 2. Neben der Grundschwingung, die durch den Kolbenbetrieb erzeugt wird, entsteht auch eine Vielzahl von Oberwellen, die charakteristisch ist. Die Aktuatoren werden nur im Stillstand, während des Befüllens oder feineren Untersuchungen benötigt, sie sind ansonsten optional. Mit ihnen können auch kleinste Leckagen detektiert werden. Als Aktuatoren 19 dienen dabei handelsübliche Piezo-Schallquellen, wie man sie in kleinen Lautsprechern bzw. Kopfhörern findet, und die ebenfalls sehr preisgünstig sind.

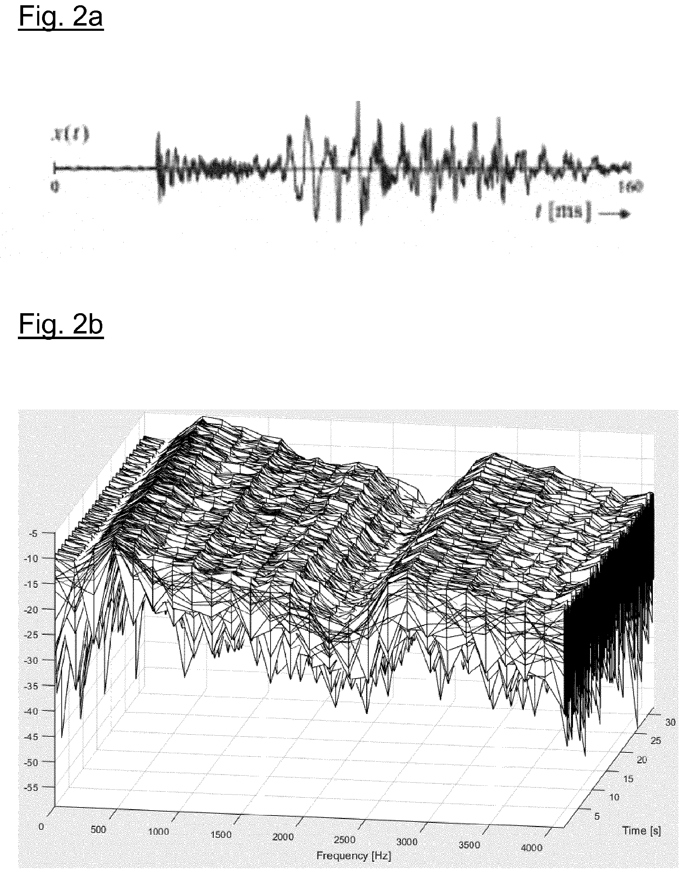

Fig. 2a zeigt einen Schwingungsverlauf, den einer der Sensoren in einer der Achsen für eine bestimmte Frequenz, hier 50 Hz, als Amplituden ausgibt während einer Zeitscheibe, die hier 150 Millisekunden beträgt. Bei drei Sensoren mit jeweils 3 Achsen ergeben sich damit 9 Schwingungskurven. Diese Schwingungskurven werden in den Frequenzraum transformiert und man erhält ein Sprektrum, üblicherweise geschieht dies durch Fast-Fourier-Transformation. Man erhält hieraus ein typisches, sich wiederholendes Muster, welches vom Füllungszustand abhängt. Bei Leckagen verschiebt sich dieses Muster hin zu höheren Frequenzen.

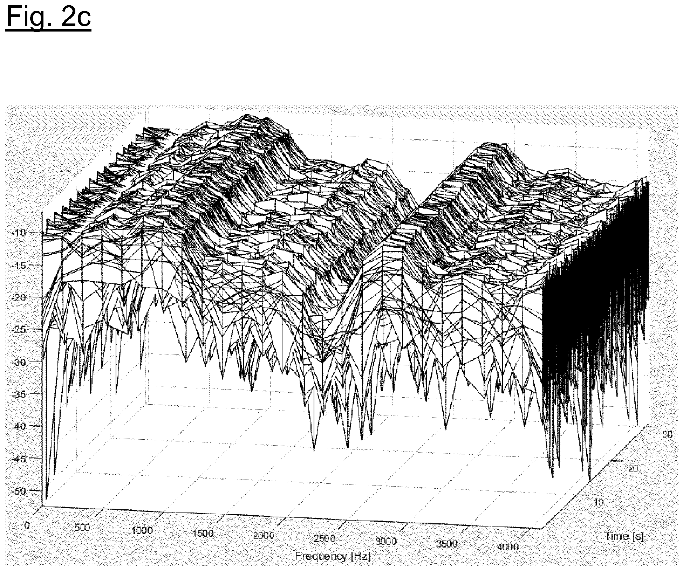

Fig. 2b zeigt ein Spektrum über ein Frequenzband von 0 bis 4000 Hz, aufgenommen über einen Zeitraum von 30 Sekunden. Dieses Spektrum lässt erkennen, bei welchen Frequenzen im gefüllten Zustand Resonanz auftritt. Auch hinsichtlich dieser Resonanzfrequenzen findet beim Auftreten von Kältemittelverlusten eine detektierbare Verschiebung in höhere Frequenzen statt. Fig. 2c zeigt ein solches verschobenes Spektrum nach einem Kältemittelverlust, wobei die in den Figuren 2b und 2c gezeigten Spektren im selben Betriebspunkt aufgenommen worden sind. Für Präzisionsanalysen können hier die Aktuatoren zum Einsatz gebracht werden, mit deren Hilfe die Resonanzfrequenzen genau bestimmt werden können.

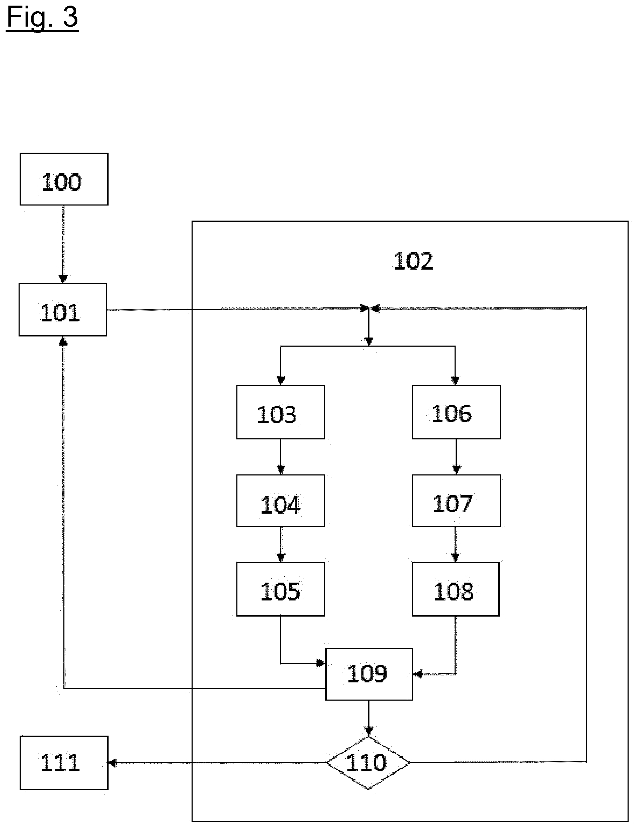

Fig. 3 zeigt ein Flussdiagramm zur Signalverarbeitung. Zu Beginn findet in der Initialisierung 100 die Gewinnung der Referenzdaten statt, dies betrifft die verschiedenen Betriebszustände und deren Toleranzfelder. Danach werden in der Adaptierung 101 die Referenzdaten übergeben und an die Anlage adaptiert, damit werden Aufstellungsdaten, zeitlicher Drift und weitere Faktoren definiert und ggf. später angepasst. Initialisierung 100 und Adaptierung 101 sind Einheiten, die von Servicepersonal bzw. im Werk durchgeführt werden.

Danach wird an die "Signal-Akquisition und -Verarbeitung" 102 weitergeleitet, die fester Bestandteil der Vorrichtung ist. In dieser Einheit sind zwei Stränge vorgesehen: Der erste Strang besteht aus der Schwingungs-Signalaufnahme 103, in der die Vibrationsamplitude mehrachsig aufgenommen wird, der Signalvorverarbeitung 104, in der das Frequenzspektrum über alle Kanäle berechnet wird, und die Signalanalyse 105, in der das Frequenzspektrum eingegrenzt wird. Für die Signalanalyse 105 stehen mehrere Alternativen zur Verfügung: Entweder es werden die Peaks im Frequenzspektrum bestimmt, wobei ein Suchfenster im Frequenzbereich definiert ist, oder es findet eine Muster-Auswertung statt. Ggf. schließt sich noch eine Normierung an. Als Methoden kommen ein evolvierender Algorithmus, Fuzzy-Logik, Neuronale Netze sowie bildverarbeitende (BV/IP)-basierende Algorithmen zur Mustererkennung zum Einsatz. Zusammengefasst betrifft den ersten Strang die Behandlung der eingehenden Signale.

Der zweite Strang betrifft dagegen die Daten, die von der Wärmepumpe geliefert werden. In der Signalaufnahme WP-System 106 werden die Zustandsgrößen als intrinsische Messwerte wie Druck, Temperatur etc. der Wärmepumpe erfasst. In der Signalverarbeitung 107 findet eine Interpolation oder eine Clusterung der Referenzbetriebszustände statt, die aus den Zustandsgrößen folgen. In der Signalnachverarbeitung 108 werden die Spektral-Referenzdaten bestimmt.

Beide Stränge laufen in der Datenkorrelation 109 zusammen, wo alternativ oder kumulativ ein Peak-Vergleich zwischen Referenzdaten und Schwingungs-Ist-Daten oder ein Mustervergleich vorgenommen wird. Ferner findet eine Toleranzanalyse statt.

Normalerweise wird danach in der Einheit "Leckageentscheidung" 110 anhand eines Schwellenwerts bzw. einer mehrdimensionalen Schwellenwerttabelle in Abhängigkeit des Betriebszustandes entschieden, ob eine Leckage vorliegt oder nicht.

Falls keine Leckage vorliegt, werden die beiden Stränge mit der Schwingungs-Signalaufnahme 103 und der Signalaufnahme WP-System 106 erneut durchlaufen.

Falls eine Leckage vorliegt, werden in der Leckage-Warnung 111 angemessene Sicherungsmaßnahmen aktiviert.

Von Zeit zu Zeit werden Daten aus der Signal-Akquisition und -Verarbeitung 102 für eine Adaptierung an die Adaptierung 101 zurückgegeben, etwa als Datenpaket an den Werksservice, damit ein lernendes System die Mustererkennung trainiert, wobei auch Daten mehrerer baugleicher Anlagen einfließen können.

### Bezugszeichenliste

- 1: Kältemittelkreislauf
- 2: Kältekompressor
- 3: Kondensor
- 4: Entspannungs-Regelventil
- 5: Verdampfer
- 6: verdichtetes Kältemittel
- 7: Wärmeträgerstrom
- 8: Umwälzpumpe
- 9: Wärmestrom
- 10: kondensiertes Kältemittel
- 11: Kältestrom
- 12: Umgebungsluft
- 13: Lüfter
- 14: erwärmtes Kältemittel
- 15: Kältemittel-Sammelbehälter
- 16: Beschleunigungssensor A
- 17: Beschleunigungssensor B
- 18: Beschleunigungssensor C
- 19: Aktuator
- 20: Aktuator mit Schwingungskompensation
- 100: Initialisierung
- 101: Adaptierung
- 102: Signal-Akquisition und -Verarbeitung
- 103: Schwingungs-Signalaufnahme
- 104: Signalvorverarbeitung
- 105: Signalanalyse
- 106: Signalaufnahme WP-System
- 107: Signalverarbeitung
- 108: Signalnachverarbeitung
- 109: Datenkorrelation
- 110: Leckageentscheidung
- 111: Leckage-Warnung

## Patentansprüche

1. Verfahren zur Erkennung von Verlusten von Arbeitsfluid in einem geschlossenen thermodynamischen Kreisprozess (1), in dem ein Zweiphasenzustand vorliegt, wobei
• Schwingungen mittels einer Vielzahl von Beschleunigungssensoren (16, 17, 18), die die Schwingungen wenigstens einer Komponente des Systems, in denen das Arbeitsfluid zweiphasig vorliegt, in wenigstens zwei Raumrichtungen gemessen werden (103),
• diese gemessenen Daten aufgezeichnet werden,
• daraus Zeitreihen gebildet werden,
• diese Zeitreihen in den Frequenzraum transformiert werden, wobei Frequenzspektren erzeugt werden (104),
• die Frequenzspektren nach der Zeit gelistet und bei verschiedenen Betriebszuständen aufgezeichnet werden (105),
• die Frequenzspektren nach unterschiedlichen Betriebszeiten miteinander korreliert (109) werden,
• Abweichungen der Frequenzspektren bei gleichen Betriebszuständen detektiert werden,
• und bei einer Verschiebung der Frequenzspektren ein Warnsignal ausgegeben wird,
• Beschleunigungssensoren (16, 17, 18) die vom System angeregten Schwingungen erfassen und **dadurch gekennzeichnet, dass** mindestens ein Schwingungsgeber (19, 20) diese vom System angeregten Schwingungen durch gegenphasige Schwingungen dämpft.

2. Verfahren nach Anspruch 1, **dadurch gekennzeichnet, dass** bei einer Verschiebung der Frequenz nach oben ein Leckage-Warnsignal (111) ausgegeben wird.

3. Verfahren nach Anspruch 1, **dadurch gekennzeichnet, dass** bei einer Verschiebung der Frequenz nach unten ein Geräte-Warnsignal ausgegeben wird.

4. Verfahren nach einem der Ansprüche 1 bis 3, **dadurch gekennzeichnet, dass** Schwingungsgeber (19, 20) das System mit Schwingungsbändern über einen großen Frequenzbereich erregen.

5. Verfahren nach einem der Ansprüche 1 bis 4, **dadurch gekennzeichnet, dass** jeder der Beschleunigungssensoren (16, 17, 18) die Beschleunigungen in drei Achsen misst.

6. Verfahren nach einem der Ansprüche 1 bis 5, **dadurch gekennzeichnet, dass** zur Gewinnung von Eigenfrequenzverschiebungswerten aufgrund von Fluidverlusten das Befüllen der Vorrichtung mit Arbeitsfluid in Stufen erfolgt, wobei nach jedem Befüllschritt mindestens ein Betriebslauf unter Ermittlung der jeweiligen Eigenfrequenzen für den jeweiligen Teilbefüllungszustand ermittelt wird, und die gemessenen Frequenzspektren mit diesen Messwerten für Teilbefüllung korreliert werden.

7. Verfahren nach einem der Ansprüche 1 bis 5, **dadurch gekennzeichnet, dass** zur Gewinnung von Eigenfrequenzverschiebungskurven aufgrund von Fluidverlusten das Befüllen der Vorrichtung mit Arbeitsfluid kontinuierlich erfolgt, wobei nach Erreichen einer Mindestfüllmenge die Anlage eingeschaltet wird und die jeweiligen Eigenfrequenzen während des weiteren Befüllvorgangs in Abhängigkeit der Füllmenge ermittelt werden, und die gemessenen Frequenzspektren mit diesen Messwerten für Teilbefüllung korreliert werden.

8. Vorrichtung zum Erkennen einer Leckage in einer Anlage, in der ein Fluid in einem Zweiphasenzustand vorliegt, wobei die Vorrichtung
• einen geschlossenen Kreislauf (1) aufweist, in dem dieses Fluid zirkuliert,
• mindestens einen Verdichter (2) und mindestens eine Entspannungsvorrichtung (4) aufweist,
• mindestens zwei Wärmetauscher (3, 5) aufweist, von denen der eine Wärme in das Fluid einführt und der andere Wärme aus dem Fluid entnimmt,
• in mindestens einem Teil der Vorrichtung, in dem im bestimmungsgemäßen Betrieb ein Zweiphasensystem (10, 11) des Fluids vorliegt, eine Vielzahl von Beschleunigungssensoren (16, 17, 18) angebracht ist,
• wobei diese Beschleunigungssensoren (16,17,18) Schwingungen in mindestens zwei Raumachsen aufnehmen können,
• die Beschleunigungssensoren (16,17,18) mit einer Rechenvorrichtung zur Speicherung und Auswertung verbunden sind,
• die daraus Zeitreihendaten bildet,
• diese Zeitreihen in den Frequenzraum transformiert,
• die gewonnenen Frequenzspektren in einer spektrographischen Darstellung nach der Zeit listet und bei verschiedenen Betriebszuständen aufgezeichnet,
• diese Frequenzspektren nach unterschiedlichen Betriebszeiten miteinander korreliert,
• und bei einer Verschiebung der Frequenzspektren ein Warnsignal ausgibt,
**dadurch gekennzeichnet, dass**
mindestens ein Schwingungsgeber (19, 20) angebracht ist, der das System mit Schwingungsbändern über einen großen Frequenzbereich erregen kann und eine gegenphasige Schwingung zu den fremderregten Schwingungen erzeugt.

9. Vorrichtung nach Anspruch 8, **dadurch gekennzeichnet, dass** sie bei einer Verschiebung der Frequenzspektren nach oben ein Leckage-Warnsignal (111) ausgibt.

10. Vorrichtung nach Anspruch 8, **dadurch gekennzeichnet, dass** sie bei einer Verschiebung der Frequenzspektren nach unten ein Geräte-Warnsignal ausgibt.

11. Vorrichtung nach einem der Ansprüche 8 bis 10, **dadurch gekennzeichnet, dass** mindestens ein Schwingungsgeber (19) in einem Teil der Vorrichtung, in der im bestimmungsgemäßen Betrieb ein Zweiphasensystem des Fluids vorliegt, angebracht ist, der das System mit Schwingungsbändern über einen großen Frequenzbereich erregen kann.

12. Vorrichtung nach einem der Ansprüche 8 bis 11, **dadurch gekennzeichnet, dass** mindestens ein Schwingungsgeber (20) zwischen dem Verdichter (2) und dem ersten folgenden Wärmetauscher (3) angebracht ist.

## Claims

1. Method for detecting losses of working fluid in a closed thermodynamic cycle (1), in which there is a two-phase state, wherein
• vibrations are measured in at least two dimensions (103) by means of a plurality of acceleration sensors (16, 17, 18), the vibrations of at least one component of the system in which the working fluid is present in two phases,
• said measured data are recorded,
• time series are formed from the latter,
• said time series are transformed into the frequency domain, wherein frequency spectra are generated (104),
• the frequency spectra are listed according to time and recorded in different operating states (105),
• the frequency spectra are correlated with one another according to different operating times (109),
• differences of the frequency spectra are detected with the same operating states,
• and with a shift of the frequency spectra a warning signal is output,
• acceleration sensors (16, 17, 18) detect vibrations excited by the system and
**characterised in that**
at least one oscillation generator (19, 20) dampens said vibrations excited by the system by means of opposite phase vibrations.

2. Method according to claim 1, **characterised in that** with an upwards shift of frequency a leak warning signal (111) is output.

3. Method according to claim 1, **characterised in that** with a downwards shift of frequency a device warning signal is output.

4. Method according to any of claims 1 to 3, **characterised in that** oscillation generators (19, 20) excite the system with vibrational bands over a large frequency range.

5. Method according to any of claims 1 to 4, **characterised in that** each of the acceleration sensors (16, 17, 18) measures the accelerations in three axes.

6. Method according to any of claims 1 to 5, **characterised in that** for obtaining natural frequency shift values due to fluid losses the device is filled with working fluid in stages, wherein after each filling step at least one operation procedure is determined by determining the respective natural frequencies for the respective part filling state and the measured frequency spectra are correlated with said measurement values for part filling.

7. Method according to any of claims 1 to 5, **characterised in that** for the production of natural frequency displacement curves due to fluid losses the device is filled continually with working fluid, wherein after reaching a minimum filling amount the installation is switched on and the respective natural frequencies are determined during the further filling process as a function of the filling amount, and the measured frequency spectra are correlated with said measurement values for partial filling.

8. Device for detecting a leak in an installation in which there is a fluid in a two-phase state, wherein the device has
• a closed circuit (1), in which said fluid circulates,
• at least one compressor (2) and at least one stress-relieving device (4),
• at least two heat exchangers (3, 5), one of which introduces heat into the fluid and the other of which removes heat from the fluid,
• in at least a part of the device, in which during the intended operation there is a two-phase system (10, 11) of the fluid, a plurality of acceleration sensors (16, 17, 18) are attached,
• wherein said acceleration sensors (16, 17, 18) can absorb vibrations in at least two spatial axes,
• the acceleration sensors (16, 17, 18) are connected to a computer device for storage and evaluation,
• which forms time series data from the latter,
• transforms said time series into the frequency domain,
• lists the frequency spectra obtained in a spectrographic representation according to time and recorded in different operating states,
• correlates with one another said frequency spectra according to different operating times,
• and with a shift of the frequency spectra outputs a warning signal,
**characterised in that**
at least one oscillation generator (19, 20) is attached which can excite the system with vibrational bands over a large frequency range and generates an opposite phase vibration to the separately excited vibrations.

9. Device according to claim 8, **characterised in that** it outputs a leak warning signal (111) during an upwards shift of the frequency spectra.

10. Device according to claim 8, **characterised in that** during a downwards shift of the frequency spectra it outputs a device warning signal.

11. Device according to any of claims 8 to 10, **characterised in that** at least one oscillation generator (19) is attached in a part of the device, in which there is a two-phase system of the fluid during the intended operation, which can excite the system with vibrational bands over a large frequency range.

12. Device according to any of claims 8 to 11, **characterised in that** at least one oscillation generator (20) is attached between the compressor (2) and the first following heat exchanger (3).

## Revendications

1. Procédé destiné à la détection de fuites d'un fluide de travail dans un cycle thermodynamique fermé (1) dans lequel il existe un état biphasé, dans lequel
• des oscillations sont mesurées (103), dans au moins deux directions spatiales, au moyen d'une pluralité de capteurs d'accélération (16, 17, 18), qui sont les oscillations d'au moins un composant du système, dans lequel le fluide de travail est biphasé,
• ces données mesurées sont enregistrées,
• des séquences chronologiques sont formées à partir de celles-ci,
• ces séquences chronologiques sont transformées dans l'espace fréquentiel, dans lequel les spectres fréquentiels sont générés (104),
• les spectres fréquentiels sont listés selon la période et sont enregistrés à différents états de fonctionnement (105),
• les spectres fréquentiels sont corrélés entre eux après différentes périodes de travail (109),
• des divergences des spectres fréquentiels sont détectées dans les mêmes états de travail,
• et un signal d'avertissement est émis lors d'un déplacement des spectres fréquentiels,
des capteurs d'accélération (16, 17, 18) saisissent les oscillations stimulées par le système et est **caractérisé en ce qu'**au moins un émetteur d'oscillations (19, 20) atténue ces oscillations stimulées par le système au moyen d'oscillations en opposition de phases.

2. Procédé selon la revendication 1, **caractérisé en ce qu'**un signal d'alarme indiquant la fuite (111) est émis lors d'un déplacement de la fréquence vers le haut.

3. Procédé selon la revendication 1, **caractérisé en ce qu'**un signal d'alarme d'appareil est émis lors d'un déplacement de la fréquence vers le bas.

4. Procédé selon l'une quelconque des revendications 1 à 3, **caractérisé en ce que** des émetteurs d'oscillations (19, 20) stimulent le système avec des bandes d'oscillation sur une large gamme de fréquences.

5. Procédé selon l'une quelconque des revendications 1 à 4, **caractérisé en ce que** chacun des capteurs d'accélération (16, 17, 18) mesure les accélérations sur trois axes.

6. Procédé selon l'une quelconque des revendications 1 à 5, **caractérisé en ce que** le remplissage du dispositif avec du fluide de travail se fait par étape pour récupérer des valeurs de déplacement de fréquence propre sur la base de pertes de fluide, dans lequel après chaque étape de remplissage, au moins une phase de saturation est déterminée en déterminant les fréquences propres respectives pour les états de remplissage partiel, et les spectres fréquentiels mesurés sont corrélés avec les valeurs de mesure pour un remplissage partiel.

7. Procédé selon l'une quelconque des revendications 1 à 5, **caractérisé en ce que** le remplissage du dispositif avec du fluide de travail se fait en continu pour récupérer des courbes de déplacement de fréquence propre sur la base de pertes de fluide, dans lequel après atteinte d'une quantité minimale de remplissage, l'installation est allumée et les fréquences propres respectives pendant l'opération de remplissage suivante est déterminée en fonction de la quantité de remplissage, et les spectres fréquentiels mesurés sont corrélés avec les valeurs de mesure pour un remplissage partiel.

8. Dispositif destiné à la détection d'une fuite dans une installation, dans lequel un fluide se trouve dans un état biphasé, dans lequel le dispositif
• présente un circuit fermé (1), dans lequel ce fluide circule,
• présente au moins un compresseur (2) et au moins un dispositif de détente (4),
• présente au moins deux échangeurs de chaleur (3, 5), depuis lequel il introduit une énergie thermique dans le fluide et retire l'autre énergie thermique du fluide,
• une pluralité de capteurs d'accélération (16, 17, 18) est montée dans au moins une partie du dispositif, dans lequel il existe un système biphasé (10, 11) dans les conditions de fonctionnement prévues,
• dans lequel ces capteurs d'accélération (16, 17, 18) peuvent enregistrer des oscillations sur au moins deux axes dans l'espace,
• les capteurs d'accélération (16, 17, 18) sont reliés avec un dispositif de calcul destiné au stockage et à l'exploitation,
• qui constitue des données de séquences chronologiques,
• transforme ces séquences chronologiques dans l'espace fréquentiel,
• liste les spectres fréquentiels récupérés dans une représentation spectrographique d'après le moment et enregistrés dans différents états de travail,
• ces spectres fréquentiels sont corrélés entre eux après différentes périodes de travail,
• et un signal d'avertissement est émis lors d'un déplacement des spectres fréquentiels,
**caractérisé en ce qu'**au moins un émetteur d'oscillations (19, 20) est monté, qui peut stimuler le système avec des bandes d'oscillation sur une large gamme de fréquences et génère une oscillation en opposition de phases au niveau des oscillations à stimulation séparée.

9. Dispositif selon la revendication 8, **caractérisé en ce qu'**un signal d'alarme indiquant la fuite (111) est émis lors d'un déplacement du spectre fréquentiel vers le haut.

10. Dispositif selon la revendication 8, **caractérisé en ce qu'**un signal d'alarme d'appareil est émis lors d'un déplacement du spectre fréquentiel vers le bas.

11. Procédé selon l'une quelconque des revendications 8 à 10, **caractérisé en ce qu'**au moins un émetteur d'oscillations (19) est monté dans une partie d'un dispositif, dans lequel un système biphasé du fluide existe dans les conditions de fonctionnement prévues, laquelle partie peut stimuler le système avec des bandes d'oscillation sur une large gamme de fréquences.

12. Dispositif selon l'une quelconque des revendications 8 à 11, **caractérisé en ce qu'**au moins un émetteur d'oscillations (20) est monté entre le compresseur (2) et le premier échangeur de chaleur (3) suivant.
